(19) 

Europäisches
Patentamt
European
Patent Office
Office européen
des brevets

(11) **EP 4 518 031 A1**

(12) **EUROPEAN PATENT APPLICATION**
published in accordance with Art. 153(4) EPC

(43) Date of publication:
**05.03.2025  Bulletin 2025/10**

(21) Application number: **22944457.5**

(22) Date of filing: **06.07.2022**

(51) International Patent Classification (IPC):
$H01Q\ 3/08^{(2006.01)}$       $H01Q\ 3/02^{(2006.01)}$

(52) Cooperative Patent Classification (CPC):
**H01Q 3/00; H01Q 3/02; H01Q 3/08; H01Q 3/30;
H01Q 21/00**

(86) International application number:
**PCT/CN2022/104097**

(87) International publication number:
**WO 2023/231142 (07.12.2023 Gazette 2023/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **30.05.2022  CN 202210604321**

(71) Applicant: **Chengdu T-Ray Technology Co., Ltd.
Chengdu, Sichuan 610002 (CN)**

(72) Inventors:
- **TANG, Qianlong
  Chengdu, Sichuan 610002 (CN)**
- **LI, Shigang
  Chengdu, Sichuan 610002 (CN)**
- **LIAO, Fei
  Chengdu, Sichuan 610002 (CN)**

(74) Representative: **Caspary, Karsten et al
Kroher-Strobel
Rechts- und Patentanwälte PartmbB
Bavariaring 20
80336 München (DE)**

(54) **ANTENNA TRACKING METHOD AND APPARATUS, AND DEVICE AND STORAGE MEDIUM**

(57)     A method device, equipment and storage medium for antenna tracking, belonging to the field of satellite signal tracking technology. The method comprises: performing dynamic zero-bias calibration on a gyroscope of a phased array antenna (110) to obtain updated gyroscope zero-bias data (S210); determining the time delay data tracked by antenna (110) (S220), wherein the delay data comprises at least one of the following: software system delay, inertial navigation delay and instruction delay; predicting an antenna beam pointing direction according to the updated gyroscope zero-bias data and the time delay data and obtaining prediction results (S230); and performing compensation for the antenna beam pointing direction according to the prediction results and tracking the antenna (110)according to the compensated antenna beam pointing direction (S240). In this way, the tracking of a satellite (120) can be implemented by means of compensation without the need for additional high-cost hardware devices, thereby reducing the equipment cost while improving the tracking accuracy.

Perform dynamic zero-bias calibration on a gyroscope of a phased array antenna to obtain updated gyroscope zero-bias data — S210

Determine tracking delay data of the antenna — S220

Predict an antenna beam pointing direction according to the updated gyroscope zero-bias data and the delay data to obtain a prediction result — S230

Perform compensation on the antenna beam pointing direction according to the prediction result, and perform antenna tracking according to the antenna beam pointing direction subjected to compensation — S240

Fig. 2

**Description**

**FIELD OF THE DISCLOSURE**

This application relates to the field of satellite signal tracking technology, specifically, it relates to a method, device, equipment and storage medium for antenna tracking.

**BACKGROUND OF THE DISCLOSURE**

In the field of satellite communications, to achieve all-weather online communication, it is necessary to ensure real-time dynamic tracking of satellites by phased array antennas.

To ensure real-time dynamic tracking of satellites by phased array antennas, existing technologies mainly improve the receiver performance of phased array antennas, typically using high-precision chips in conjunction with digital signal processing to enhance dynamic tracking capabilities.

However, the use of high-precision chips leads to higher production costs, increased hardware complexity, and more complex software processing. Additionally, it requires structural improvements to phased array antennas at the time of manufacture, which cannot enhance the tracking capabilities of products already in use in the market.

**SUMMARY OF THE DISCLOSURE**

The objective of this application is to provide an antenna tracking method, apparatus, device, and storage medium that can track satellites through compensation without the need for additional high-cost hardware, thereby reducing equipment costs while improving tracking accuracy.

The embodiments of this application are implemented as follows:

One aspect of the embodiments of this application provides a method for antenna tracking, comprising:

performing dynamic zero-bias calibration on the gyroscope of a phased array antenna to obtain updated gyroscope zero-bias data;

determining the time delay data tracked by antenna, wherein the time delay data comprises at least one of the following: software system delay, inertial navigation delay and instruction delay;

predicting the antenna beam pointing direction according to the updated gyroscope zero-bias data and time delay data, and obtaining prediction results;

performing compensation for the antenna beam pointing direction according to the prediction results and tracking the antenna according to the compensated beam pointing direction.

Optionally, the predicting the antenna beam direction according to the updated gyroscope zero-bias data and time delay data, and obtaining the prediction results, comprises:

predicting the angle change information of the phased array antenna according to the updated gyroscope zero-bias data and time delay data, and using the angle change information as the prediction results, wherein the angel change information includes: heading angle change information, pitch angle change information, and roll angle change information.

Optionally, the performing compensation for the antenna beam pointing direction according to the prediction results and tracking the antenna according to the compensated antenna beam pointing direction comprises:

determining the compensated antenna beam pointing direction according to the angle change information, which comprises azimuth direction and elevation direction; and

tracking the antenna according to the compensated antenna beam pointing direction.

Optionally, the determining the compensated antenna beam pointing direction according to the angle change information comprises:

determining the current attitude rotation matrix of the phased array antenna based on the angle change information;

determining the compensated unit vectors in various directions according to the current attitude rotation matrix and the unit vector of the current beam direction; and

obtaining the compensated antenna beam direction according to the compensated unit vectors in various directions.

Optionally, prior to determining the compensated unit vectors in various directions based on the current attitude rotation matrix and the unit vector of the current beam direction, the method further comprises:

determining the unit vector of the current beam direction based on the elevation and azimuth of the beam direction under the current geographical coordinate system.

Optionally, the determining the time delay data tracked by antenna comprises:
obtaining the time delay data tracked by antenna in response to user input; or, generating the time delay data tracked by antenna according to the historical execution data of the antenna.

Optionally, the performing dynamic zero-bias calibration on the gyroscope of the phased array antenna to obtain the updated gyroscope zero-bias data comprises:

collecting gyroscope data from the phased array antenna when it is powered on ;
calculating the average offset value of the gyroscope data;
determining whether the average offset value meets the preset working conditions;
if it does, the gyroscope data is updated based on the average offset value, resulting in the updated gyroscope zero-bias data;
if it does not, re-collecting the gyroscope data of the phased array antenna and recalculate the average offset value, repeating the process until the average offset value meets the preset working conditions.

Another aspect of this application example provides an antenna tracking device, comprising a calibration module, a delay module, a prediction module, and a compensation module; wherein

the calibration module is used for dynamic zero-bias calibration of the gyroscope of the phased array antenna to obtain the updated gyroscope zero-bias data;
the delay module is used to determine the time delay data for antenna tracking, which comprises at least one of the following: software system delay, inertial navigation delay, instruction delay;
the prediction module is used to predict the antenna beam direction based on the updated gyroscope zero-bias data and time delay data, obtaining the prediction results; and
the compensation module is used to compensate the antenna beam direction based on the prediction results, and track the antenna according to the compensated antenna beam direction.

Optionally, the prediction module specifically uses the updated gyroscope zero-bias data and time delay data to predict the angle change information of the phased array antenna, and using the angle change information as the prediction result, wherein the angle change information comprises: heading angle change information, pitch angle change information, and roll angle change information.

Optionally, the prediction module specifically uses the angle change information to determine the compensated antenna beam direction, which comprises azimuth direction and elevation direction; and the antenna is tracked according to the compensated antenna beam direction.

Optionally, the prediction module specifically uses the angle change information to determine the current attitude rotation matrix of the phased array antenna; according to the current attitude rotation matrix and the unit vector of the current beam direction, the unit vectors of each direction after compensation are determined; according to the compensated unit vectors of each direction, the compensated antenna beam direction is obtained.

Optionally, the prediction module is also used to determine the unit vector of the current beam direction according to the elevation and azimuth of the beam pointing direction under the current geographical coordinate system.

Optionally, the delay module specifically serves to obtain time delay data tracked by antenna in response to user input; alternatively, it generates time delay data tracked by antenna according to the historical performance data of the antenna.

Optionally, the calibration module is specifically used to: collect gyroscope data from the phased array antenna upon power-up; calculate the average offset value of the gyroscope data; determine if the average offset value meets the preset operational conditions; if met, update the gyroscope data based on the average offset value to obtain the updated zero-bias data; if not met, re-collect the gyroscope data from the phased array antenna and recalculate the average offset value, repeating the process until the average offset value meets the preset operational conditions.

Another aspect of this application embodiment provides a computer device comprising: a memory, a processor, wherein the memory stores a computer program executable on the processor, which when executed by the processor, implements the steps of the antenna tracking method.

Another aspect of this application embodiment provides a computer-readable storage medium, which stores a computer program that, when executed by a processor, implements the steps of the antenna tracking method.

The beneficial effects of this application embodiment comprise:
The antenna tracking method, apparatus, device, and storage medium provided in this application embodiment enable dynamic zero-bias calibration of the gyroscope in the phased array antenna to obtain updated zero-bias data; determine the time delay data for antenna tracking; predict the antenna beam direction based on the updated gyroscope zero-bias data and time delay data, obtaining prediction results; based on these results, compensate the antenna beam direction and track the antenna according to the compensated beam direction.

## BRIEF DESCRIPTION OF THE DRAWINGS

To more clearly illustrate the technical solutions of the embodiments of this application, the following will provide a brief introduction to the drawings required for the embodiments. It should be understood that the drawings below only show some embodiments of this application and should not be seen as limiting the scope. For those skilled in the art, other related drawings can be obtained based on these drawings without creative effort.

Figure 1 is a schematic diagram of the application scenario for the antenna tracking described in the embodiments of this application.
Figure 2 is a flowchart of the antenna tracking method provided by the embodiments of this application.
Figure 3 is another flowchart of the antenna tracking method provided by the embodiments of this application.
Figure 4 is another flowchart of the antenna tracking method provided by the embodiments of this application.
Figure 5 is another flowchart of the antenna tracking method provided by the embodiments of this application.
Figure 6 is a structural diagram of the antenna tracking device provided by the embodiments of this application.
Figure 7 is a structural diagram of the computer equipment provided by the embodiments of this application.

## DETAILED IMPLEMENTATION OF THE DISCLOSURE

To make the objectives, technical solutions, and advantages of the embodiments of this application clearer, the following will provide a clear and complete description of the technical solutions in the embodiments of this application, using the accompanying drawings. It is evident that the described embodiments are part of the embodiments of this application, not all of them. Typically, the components of the embodiments described and shown here can be arranged and designed in various different configurations.

Therefore, the detailed description of the embodiments of this application provided in the drawings below is not intended to limit the scope of this application but merely represents selected embodiments of this application. Based on the embodiments in this application, all other embodiments obtained by those skilled in the art without creative effort fall within the scope of protection of this application.

It should be noted that similar labels and letters in the drawings below represent similar items; therefore, once an item is defined in one drawing, it does not need to be further defined or explained in subsequent drawings.

In the description of this application, it should be noted that terms such as "first," "second," "third," etc., are used only to distinguish descriptions and should not be interpreted as indicating or implying relative importance.

In the field of satellite communications, due to the communication needs in production and daily life, it is necessary to achieve all-weather online communication. To achieve all-weather online communication, it is necessary to ensure that the ground antennas are dynamically and accurately pointing at the satellites in real-time.

For different types of antennas, the methods for achieving real-time dynamic satellite pointing vary; for example, traditional parabolic antennas achieve satellite alignment through mechanical servo control guided by a posture measurement module, whereas phased array antennas control beam pointing using electronic scanning technology.

This application primarily targets real-time dynamic satellite pointing with phased array antennas, which typically requires enhancing the antenna's satellite signal reception performance or improving the antenna's inertial navigation performance.

In existing technology, to enhance signal reception performance, high-precision operational chips and data processing chips are typically used in conjunction with preset digital signal processing methods to improve reception accuracy and thereby enhance signal reception performance.

To enhance inertial navigation performance, higher-grade inertial navigation devices are typically used to improve the accuracy of posture measurement under dynamic conditions.

Regardless of the method used in existing technology, hardware improvements are required, which increase hardware costs, and these improvements need to be configured during the production of the phased array antenna, making it difficult to enhance tracking accuracy for phased array antennas already in use on the market, thus limiting their applicability.

The antenna tracking method provided in this embodiment of the application can enhance tracking accuracy without hardware modifications, through compensation, achieving real-time dynamic satellite pointing with phased array antennas.

To more accurately describe the implementation scenario of this application, the following explains the application scenario of the antenna tracking method provided in this embodiment.

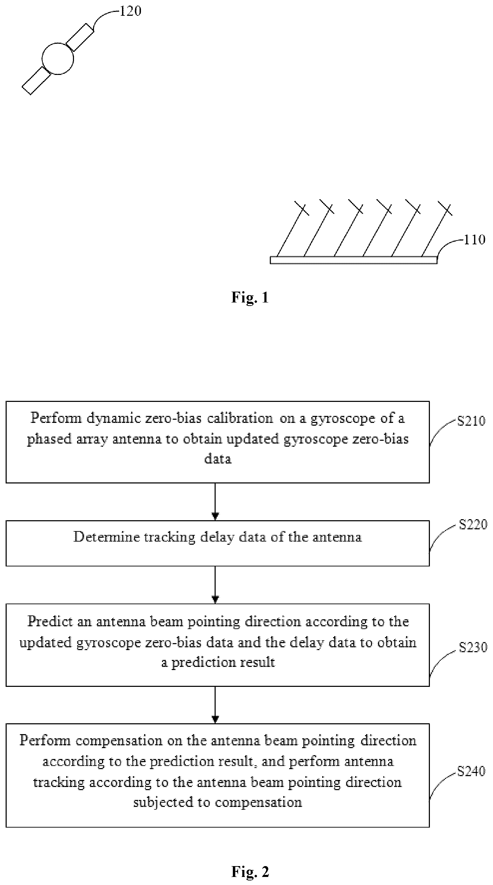

Figure 1 is a schematic diagram of the application scenario for the antenna tracking method provided in this embodiment of the application; refer to Figure 1, which comprises: phased array antenna 110, satellite 120.

The phased array antenna 110 can be an antenna that changes the shape of its radiation pattern by controlling the feed phase of the radiating elements in the array antenna. By controlling the phase, the direction of the maximum value of the antenna's radiation pattern can be altered to achieve the purpose of beam scanning.

Satellite 120 can be a communication satellite, and during antenna tracking, the tracking of satellite 120 by the phased array antenna 110 can be achieved by controlling the orientation of the antenna beam.

The following is to explain the specific implementation process of the antenna tracking method provided in the embodiments of the present application based on the above application scenarios.

Figure 2 is a flowchart of the antenna tracking method provided by this embodiment of the application. Please refer to Figure 2, which comprises:

S210: performing dynamic zero-bias calibration on the gyroscope of the phased array antenna to obtain the updated gyroscope zero-bias data.

Optionally, the executing entity of this method can be the control device of the antenna, which can be installed in the phased array antenna 110 shown in Figure 1, or simply communicate with the phased array antenna 110, without specific structural limitations, and set according to the actual working form of the antenna.

The phased array antenna may comprise a gyroscope, which can be a device used to detect the angular motion of the phased array antenna.

When initiating the antenna for satellite tracking, dynamic zero-bias calibration of the gyroscope can be performed first to eliminate operational errors of the gyroscope, and after the calibration, updated gyroscope zero-bias data can be obtained.

Specifically, the updated gyroscope zero-bias data can be the offset values of the gyroscope in three spatial directions.

S220: Determining the time delay data tracked by antenna.

The delay data comprises at least one of the following: software system delay, inertial navigation delay, instruction delay.

After the gyroscope zero-bias calibration is completed, the delay data for antenna tracking can be determined, which specifically refers to the time errors caused by various factors during the operation of the antenna.

Specifically, the software system delay can be the delay caused by the time consumed by the antenna's control device in executing code, the delay in loading content in the software system, etc.; inertial navigation delay can be the delay during the execution of inertial navigation solution algorithms, the delay in inertial navigation attitude measurement, etc.; instruction delay can comprise: the delay in time consumed during the transmission of antenna pointing instructions, the delay in time consumed during the execution of antenna instructions, etc.

The aforementioned delays can be directly obtained based on historical data, or estimated and determined by personnel based on historical experience.

S230: Predicting the antenna beam pointing direction based on the updated gyroscope zero-bias data and time delay data, and obtain the prediction results.

Optionally, after obtaining the updated gyroscope zero-bias data and delay data, it is possible to predict the antenna beam direction, which is to determine the movement trend of the antenna.

Specifically, during the movement of the antenna, it adheres to the principles of kinematics, exhibiting continuous changes within a unit of time. The movement trend can be predicted using angular velocity to forecast the direction of angle changes, and using linear velocity to predict the direction of carrier position changes.

After predicting the antenna beam direction, the corresponding prediction results can be calculated.

S240: According to the prediction results, compensation is made for the antenna beam direction, and antenna tracking is conducted according to the compensated antenna beam direction.

Optionally, after obtaining the prediction results, compensation calculations can be performed on the antenna beam direction, resulting in a compensated antenna beam direction. The phased array antenna can then track based on the compensated antenna beam direction.

In the antenna tracking method provided by this application example, dynamic zero-bias calibration can be performed on the gyroscope of the phased array antenna to obtain updated gyroscope zero-bias data; determine the delay data for antenna tracking; based on the updated gyroscope zero-bias data and delay data, predict the antenna beam direction and obtain prediction results; based on the prediction results, compensate the antenna beam direction and conduct antenna tracking according to the compensated antenna beam direction.

It should be noted that the aforementioned method can be implemented through software algorithms set in the antenna's control device. For antennas already in use in the market, equipping the corresponding control device with the appropriate software algorithms can achieve the described method without the need for structural changes.

The following will specifically explain another implementation process of the antenna tracking method provided in this application example.

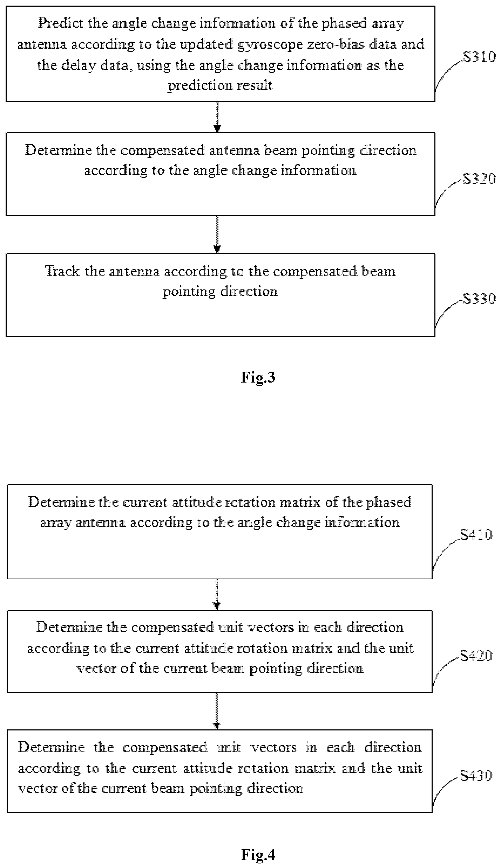

Figure 3 is another flowchart of the antenna tracking method provided by this application example. Refer to Figure 3, based on the updated gyroscope zero-bias data and delay data, the antenna beam direction is predicted, and the prediction results comprise:

S310: based on the updated gyroscope zero-bias data and delay data, predict the angle change information of the phased array antenna, and use the angle change information as the prediction result.

The angle change information comprises: heading angle change information, pitch angle change information, and roll angle change information.

Optionally, after obtaining the updated gyroscope zero-bias data and time delay data, the angle change information of the phased array antenna can be predicted, with the specific formulas as follows:

Heading angle:

$$\psi_{new} = \psi + (z_t - gyro\_bais\_x) * (T + t);$$

Pitch angle:

$$\gamma_{new} = \gamma + (y_t - gyro\_bais\_y) * (T + t);$$

Roll angle:

$$\vartheta_{new} = \vartheta + (x_t - gyro\_bais\_z) * (T + t);$$

Where, $\psi$ is the initial size of the heading angle, $\gamma$ is the initial size of the pitch angle, $\vartheta$ is the initial size of the roll angle; $\psi_{new}$ is the predicted size of the heading angle, $\gamma_{new}$ is the predicted size of the pitch angle, $\vartheta_{new}$ is the predicted size of the roll angle; gyro_bais-x is the zero-bias value on the x-axis of the gyroscope, gyro_bais_y is the zero-bias value on the y-axis of the gyroscope, gyro_bais_z is the zero-bias value on the z-axis of the gyroscope; t is the unit time; $x_t$ is the gyroscope's x-axis reading in unit time, $y_t$ is the gyroscope's y-axis reading in unit time, $z_t$ is the gyroscope's z-axis reading in unit time; T is the total delay.

It should be noted that the right, front, and top directions of the antenna generally form a right-hand system, where rotation around the forward axis is the roll angle, rotation around the right axis is the pitch angle, and rotation around the upward axis is the heading angle.

According to the above calculation method, the angle change information can be used as the prediction result.

Optionally, based on the prediction results, compensate the antenna beam direction and perform antenna tracking according to the compensated antenna beam direction, including:

S320: Determine the compensated antenna beam direction based on the angle change information.

Wherein the antenna beam direction comprises azimuth direction and elevation direction.

Optionally, after obtaining the angle change information, a compensation calculation for the antenna beam direction can be performed based on a pre-configured algorithm to obtain the compensated antenna beam direction.

Wherein, the azimuth and elevation angles can be used to describe the position of the satellite relative to the antenna, and by determining the compensated azimuth and elevation directions, the position of the satellite can be ascertained.

S330: Track the antenna according to the compensated antenna beam direction.

Optionally, after obtaining the compensated antenna beam through the above method, tracking can be performed according to the compensated antenna beam direction.

In this implementation example of the antenna tracking method, the angle change information of the phased array antenna can be predicted based on updated gyroscope zero-bias data and delay data, with the angle change information serving as the prediction result; the compensated antenna beam direction is determined based on the angle change information; tracking is performed according to the compensated antenna beam direction.

The following is a detailed explanation of another specific implementation process of the antenna tracking method provided in this application example.

Figure 4 is another flowchart of the antenna tracking method provided in this application example; please refer to Figure 4, which comprises determining the compensated antenna beam direction based on angle change information.

S410: Determine the current attitude rotation matrix of the phased array antenna based on the angle change information.

Optionally, after obtaining the aforementioned angle change information (that is, to get $\psi_{new}$, $\gamma_{new}$, $\vartheta_{new}$), the specific calculation method for the current attitude rotation matrix is as follows:

EP 4 518 031 A1

$$M_e^b = \begin{bmatrix} \cos\psi_{new} & \sin\psi_{new} & 0 \\ -\sin\psi_{new} & \cos\psi_{new} & 0 \\ 0 & 0 & 1 \end{bmatrix} \begin{bmatrix} \cos\gamma_{new} & 0 & -\sin\gamma_{new} \\ 0 & 1 & 0 \\ \sin\gamma_{new} & 0 & \cos\gamma_{new} \end{bmatrix} \begin{bmatrix} 1 & 0 & 0 \\ 0 & \cos\vartheta_{new} & \sin\vartheta_{new} \\ 0 & -\sin\vartheta_{new} & \cos\vartheta_{new} \end{bmatrix}$$

Wherein, $M_e^b$ represents the current attitude rotation matrix, and other parameters in the matrix have been explained in the aforementioned formula and will not be elaborated here.

S420: Based on the current attitude rotation matrix and the unit vector of the current beam direction, determine the unit vectors of the compensated directions.

Optionally, the calculation process for the unit vectors in each direction after compensation is as follows:

$$\begin{bmatrix} X_b \\ Y_b \\ Z_b \end{bmatrix} = M_e^b \begin{bmatrix} X_e \\ Y_e \\ Z_e \end{bmatrix};$$

Wherein, $\begin{bmatrix} X_b \\ Y_b \\ Z_b \end{bmatrix}$ represents the unit vectors in each direction after compensation, $\begin{bmatrix} X_e \\ Y_e \\ Z_e \end{bmatrix}$ represents the unit vector of the current beam direction.

S430: Based on the unit vectors in each direction after compensation, the compensated antenna beam direction is obtained.

Optionally, the compensated antenna beam direction also refers to the specific azimuth and elevation directions, where the calculation method for azimuth direction is as follows:

$$AZ_b = \arctan\left(\frac{Y_b}{X_b}\right);$$

Wherein, $AZ_b$ represents the azimuth direction.

The calculation method for elevation direction is as follows:

$$EL_b = 90 - \arcsin(Z_b);$$

Wherein, $EL_b$ represents the elevation direction.

In the antenna tracking method provided by this application example, the current attitude rotation matrix of the phased array antenna can be determined based on angle change information; based on the current attitude rotation matrix and the unit vector of the current beam direction, the unit vectors in each direction after compensation are determined; based on the unit vectors in each direction after compensation, the compensated antenna beam direction is obtained. Through calculations using the rotation matrix, more accurate unit vectors in each direction after compensation can be obtained, which in turn provides a more accurate compensated antenna beam direction, enhancing the precision of antenna tracking.

Optionally, before determining the unit vectors in each direction after compensation based on the current attitude rotation matrix and the unit vector of the current beam direction, the method also comprises determining the unit vector of the current beam direction based on the elevation and azimuth angles under the current geographical coordinate system.

The specific calculation formula is as follows:

$$\begin{bmatrix} X_e \\ Y_e \\ Z_e \end{bmatrix} = \begin{bmatrix} cos(-EL_e)cos(AZ_e) \\ cos(-EL_e)sin(AZ_e) \\ sin(-EL_e) \end{bmatrix},$$

Based on the above formula, the unit vector of the current beam direction can be obtained.

Optionally, determine the delay data for antenna tracking, including obtaining the delay data for antenna tracking in response to user input; or generating the delay data for antenna tracking based on the historical execution data of the antenna.

It should be noted that based on different types of delay data, various methods can be employed to determine them. For instance, software system delay can be directly calculated using the antenna's control device, inertial navigation delay can be obtained by the user inputting historical data or trends, and instruction delay can be estimated based on historical execution data of instructions.

Optionally, after obtaining each type of delay data through different methods, the sum of all delay data can be calculated, which yields the total delay, referred to as T in the aforementioned calculation formula.

The following explains the specific implementation process of dynamic zero-bias calibration for the gyroscope in the antenna tracking method provided in this application example.

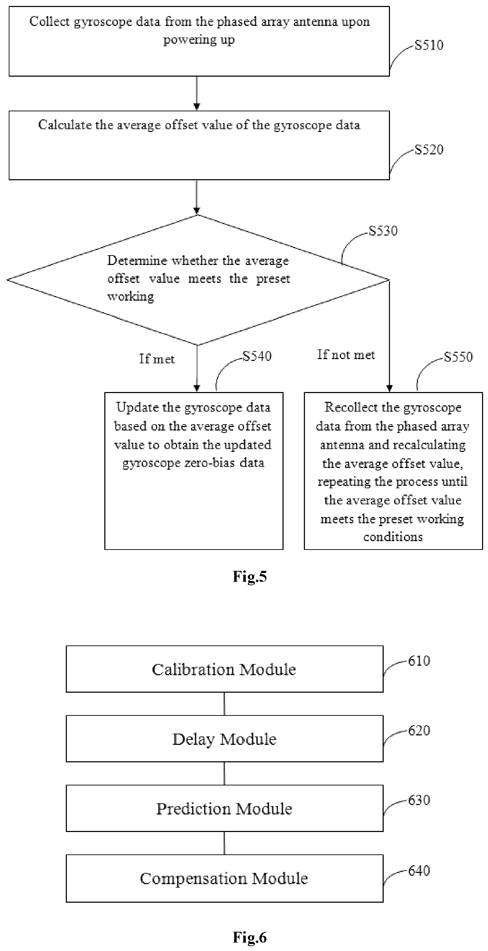

Figure 5 is another flowchart of the antenna tracking method provided in this application example. Refer to Figure 5 for dynamic zero-bias calibration of the gyroscope in the phased array antenna to obtain updated zero-bias data, including:

S510: When the phased array antenna is powered on, collect the gyroscope data of the phased array antenna.

Optionally, when the phased array antenna is powered on, collect N data points of the triaxial gyroscope in a stationary state, calculate the average values for each axis, and obtain the gyroscope data of the phased array antenna: gyro_bais_x, gyro_bais_y, gyro_bais_z; where gyro_bais_x is the x-axis data collected, gyro bais_y is the y-axis data collected, and gyro _bais_z is the z-axis data collected.

S520: Calculate the average offset value of the gyroscope data.

In subsequent operations, M segments of data can be collected, each containing L data points, with the total gyroscope data for M segments being N=M*L.

When calculating the average offset value of the gyroscope data, each new data point collected is subtracted by the zero-bias base value and placed into a median digital filter, then the average offset value for that segment of data is calculated, with the specific formula as follows:

$$offset[0] += (x - gyro\_bais\_x)/L;$$

$$offset[1] += (y - gyro\_bais\_y) / L;$$

$$offset[2] += (z - gyro\_bais\_z) / L;$$

Wherein, x, y, z are the values of the new data collected each time, and offset[0], offset[1], offset[2] are the average offset values for each axis.

S530: Determine whether the average offset values meet the preset working conditions.

Optionally, after obtaining the average offset values for each axis, the difference between the median filter and the average offsets can be calculated:

$$xdiff = filter[0].median - offset[0];$$

$$ydiff = filter[1].median - offset[1];$$

$$zdiff = filter[2].median - offset[2];$$

Wherein, xdiff is the difference in average offset for the x-axis, ydiff is the difference in average offset for the y-axis, zdiff is the difference in average offset for the z-axis, filter[0]. median is the x-axis value in the median filter, filter[1].median is the y-axis value in the median filter, filter[2].median is the z-axis value in the median filter.

After obtaining the aforementioned differences, it can be determined whether xdiff, ydiff, zdiff exceed the threshold; if so, they do not meet the preset working conditions; if not, they meet the preset working conditions.

If met, S540: Update the gyroscope data based on the average offset values, obtaining the updated gyroscope zero-bias data.

The update process is as follows:

$$gyro\_bais\_x\_new[i] = offset[0], \; i \in [;$$

$$gyro\_bais\_y\_new[i] = offset[1], \; i \in [;$$

$$gyro\_bais\_z\_new[i] = offset[2], \; i \in [;$$

The updated gyroscope zero-bias data is as follows:

$$gyro\_bais\_x \mathrel{+}= \frac{\sum_{i=0}^{M} gyro\_bais\_x\_i}{M};$$

$$gyro\_bais\_y \mathrel{+}= \frac{\sum_{i=0}^{M} gyro\_bais\_y\_i}{M};$$

$$gyro\_bais\_z \mathrel{+}= \frac{\sum_{i=0}^{M} gyro\_bais\_z\_i}{M};$$

The updated gyroscope zero-bias data are gyro_bais_x, gyro _bais_y, gyro_bais_z.

If not met, S550: Recollect the gyroscope data of the phased array antenna and recalculate the average offset value, repeat the process until the average offset value meets the preset working conditions.

Optionally, if the working conditions are not met, the data can be recollected and the average offset value recalculated, repeating the process until the average offset value meets the preset working conditions.

In the antenna tracking method provided by this application example, when the phased array antenna is powered on, the gyroscope data of the phased array antenna can be collected; the average offset value of the gyroscope data is calculated; it is determined whether the average offset value meets the preset working conditions; if met, the gyroscope data is updated based on the average offset value, resulting in updated zero-bias data; if not met, the gyroscope data of the phased array antenna is recollected and the average offset value recalculated, repeating the process until the average offset value meets the preset working conditions. Through the determination of the average offset value, dynamic zero-bias calibration of the gyroscope can be achieved, thus obtaining more accurate zero-bias data.

The following describes the devices, equipment, and storage media corresponding to the antenna tracking method provided by this application for execution. The specific implementation process and technical effects are referred to above and will not be reiterated here.

Figure 6 is a schematic diagram of the structure of the antenna tracking device provided by this application example. Refer to Figure 6, the device comprises: a calibration module 610, a delay module 620, a prediction module 630, and a compensation module 640;

Calibration module 610, used for dynamic zero-bias calibration of the gyroscope of the phased array antenna to obtain updated zero-bias data;

Delay module 620, used to determine the delay data for antenna tracking, which comprises at least one of the following: software system delay, inertial navigation delay, instruction delay;

Prediction module 630, used to predict the antenna beam direction based on the updated zero-bias data and delay data, obtaining the prediction results;

Compensation module 640, used to compensate the antenna beam direction based on the prediction results, and to track the antenna according to the compensated antenna beam direction.

Optionally, the prediction module 630 is specifically used to predict the angle change information of the phased array antenna based on the updated gyroscope zero-bias data and delay data, taking the angle change information as the prediction result, which comprises: heading angle change information, pitch angle change information, and roll angle change information.

Optionally, the prediction module 630 is specifically used to determine the compensated antenna beam direction based on the angle change information, which comprises azimuth direction and elevation direction; antenna tracking is performed according to the compensated antenna beam direction.

Optionally, the prediction module 630 is specifically used to determine the current attitude rotation matrix of the phased array antenna based on the angle change information; determine the compensated unit vectors in each direction based on the current attitude rotation matrix and the current beam direction unit vector; obtain the compensated antenna beam direction based on the compensated unit vectors in each direction.

Optionally, the prediction module 630 is also used to determine the unit vector of the current beam direction based on the elevation and azimuth of the beam direction under the current geographic coordinate system.

Optionally, the delay module 620 is specifically used to obtain the delay data for antenna tracking in response to user input; or, based on the historical execution data of the antenna, generate the delay data for antenna tracking.

Optionally, the calibration module 610 is specifically used to collect gyroscope data of the phased array antenna when powered on; calculate the average offset value of the gyroscope data; determine whether the average offset value meets the preset working conditions; if met, update the gyroscope data based on the average offset value to obtain the updated gyroscope zero-bias data; if not met, recollect the gyroscope data of the phased array antenna and recalculate the average offset value, and repeat the process until the average offset value meets the preset working conditions.

The aforementioned device is used to execute the method provided in the previous examples, with similar implementation principles and technical effects, which are not further elaborated here.

The aforementioned modules can be one or more integrated circuits configured to implement the above method, such as one or more Application Specific Integrated Circuits (ASIC), or one or more microprocessors, or one or more Field Programmable Gate Arrays (FPGA), etc. Furthermore, when one of the above modules is implemented by scheduling program code through a processing element, the processing element can be a general processor, such as a Central Processing Unit (CPU) or other processors that can invoke program code. Additionally, these modules can be integrated together to be implemented in the form of a system-on-a-chip (SOC).

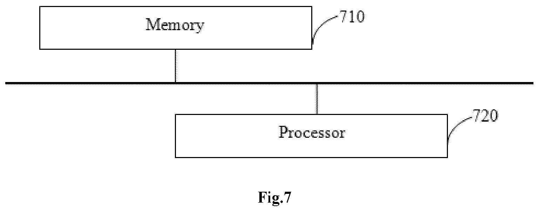

Figure 7 is a schematic diagram of the computer device structure provided by this application example. Refer to Figure 7, the computer device comprises: memory 710, processor 720, with a computer program stored in memory 710 that runs on processor 720, which implements the steps of the antenna tracking method when executed by processor 720.

Optionally, the computer device can specifically be the control device for the aforementioned antenna, which can be a computer, a dedicated electronic device, or a controller integrated into the antenna, without specific limitations on the form, as long as it can implement the execution process of the aforementioned method.

Another aspect of this application example provides a computer-readable storage medium, which stores a computer program that, when executed by a processor, implements the steps of the antenna tracking method.

In several embodiments provided by this invention, it should be understood that the disclosed devices and methods can be implemented in other ways. For example, the device embodiments described above are merely illustrative. For instance, the division of units is just a logical functional division, and other division methods can be used in actual implementation, such as multiple units or components can be combined or integrated into another system, or some features can be omitted or not executed. Additionally, the coupling or direct coupling or communication connections shown or discussed can be indirect through interfaces, devices, or units, and can be electrical, mechanical, or other forms.

The units described as separate components can be physically separate or not, and the parts displayed as units can be or may not be physical units, i.e., they can be located in one place or distributed across multiple network units. Parts or all of the units can be selected as needed to achieve the objectives of this embodiment.

Furthermore, in various embodiments of this invention, the functional units can be integrated into a single processing unit, or each unit can exist physically separately, or two or more units can be integrated into one unit. The integrated units mentioned can be implemented in the form of hardware, or as a combination of hardware and software functional units.

The integrated units implemented as software functional units can be stored in a computer-readable storage medium. These software functional units stored in a storage medium comprise several instructions to enable a computing device (such as a personal computer, server, or network device) or processor to execute parts of the methods of various embodiments of this invention. The aforementioned storage media comprise USB drives, portable hard drives, Read-Only Memory (ROM), Random Access Memory (RAM), disks, or optical discs, among other media capable of storing program code.

The above only represents specific embodiments of this application, but the scope of protection of this application is not limited to these. Any technician familiar with this technical field can easily think of variations or substitutions within the technical scope disclosed by this application, and they should be comprised within the scope of protection of this application. Therefore, the scope of protection of this application should be determined by the scope of the claims.

The above descriptions are merely preferred embodiments of this application and are not intended to limit this application. For technicians in this field, various modifications and changes can be made to this application. Any modifications, equivalent substitutions, and improvements made within the spirit and principles of this application should be comprised within the scope of protection of this application.

Claims

1. A method for antenna tracking, **characterized in that** it comprises:

   performing dynamic zero-bias calibration on the gyroscope of a phased array antenna to obtain updated gyroscope zero-bias data;

   determining the time delay data tracked by antenna, wherein the delay data comprises at least one of the following: software system delay, inertial navigation delay and instruction delay;

   predicting an antenna beam pointing direction according to the updated gyroscope zero-bias data and the time delay data and obtaining prediction results;

   performing compensation for the antenna beam pointing direction according to the prediction results and tracking the antenna according to the compensated antenna beam pointing direction.

2. The method according to claim 1, **characterized in that**

   predicting the antenna beam pointing direction according to the updated gyroscope zero-bias data and the time delay data and obtaining prediction results comprises:

   predicting angle change information of the phased array antenna according to the updated gyroscope zero-bias data and the time delay data, and using the angle change information as the prediction results, wherein the angel change information includes: heading angle change information, pitch angle change information, and roll angle change information.

3. The method according to claim 2, **characterized in that**,

   performing compensation for the antenna beam pointing direction according to the prediction results and tracking the antenna according to the compensated antenna beam pointing direction comprises:

   determining the compensated antenna beam pointing direction according to the angle change information, which comprises azimuth orientation and elevation orientation; and

   tracking the antenna according to the compensated antenna beam pointing direction.

4. The method according to claim 3, **characterized in that** determining the compensated antenna beam pointing direction according to the angle change information comprises:

   determining the current attitude rotation matrix of the phased array antenna according to the angle change information;

   determining the compensated unit vectors in each direction according to the current attitude rotation matrix and the unit vector of the current beam pointing direction; and

   obtaining the compensated antenna beam pointing direction according to the compensated unit vectors in each direction.

5. The method according to claim 4, **characterized in that**, prior to determining the compensated unit vectors in each direction according to the current attitude rotation matrix and the unit vector of the current beam pointing direction, the method further comprises:

   determining the unit vector of the current beam pointing direction according to the elevation angle and azimuth angle of the beam pointing direction under the current geographic coordinate system.

6. The method according to claim 1, **characterized in that**,

   determining the delay data tracked by antenna comprises:

   obtaining the time delay data tracked by antenna in response to user input; or,

   generating the time delay data tracked by antenna according to the historical execution data of the antenna.

7. The method according to claim 1, **characterized in that** performing dynamic zero-bias calibration on a gyroscope of a phased array antenna to obtain updated gyroscope zero-bias data comprises:

   collecting gyroscope data from the phased array antenna when it is powered on;

   calculating the average offset value of the gyroscope data;

   determining whether the average offset value meets the preset working conditions;

   if it does, updating the gyroscope data based on the average offset value to obtain the updated gyroscope zero-bias data;

if it does not, re-collecting the gyroscope data from the phased array antenna and recalculating the average offset value, repeating the process until the average offset value meets the preset working conditions.

8. An antenna tracking device, **characterized in that** the device comprises:

a calibration module, a delay module, a prediction module, and a compensation module, wherein the calibration module is used for dynamic zero-bias calibration of the gyroscope in the phased array antenna to obtain updated gyroscope zero-bias data;

the delay module being used to determine the delay data for antenna tracking, which comprises at least one of the following: a software system delay, an inertial navigation delay and an instruction delay;

the prediction module being used to predict the antenna beam pointing direction according to the updated gyroscope zero-bias data and the delay data, obtaining the prediction result; and

the compensation module being used to compensate the antenna beam pointing direction according to the prediction result and to track the antenna according to the compensated antenna beam pointing direction.

9. A computer device, **characterized in that** it comprises:

a memory, a processor, wherein

the memory stores a computer program that can run on the processor, and when the processor executes the computer program, it implements the steps of any one of claims 1 to 7.

10. A computer storage medium, **characterized in that**, it stores a computer program, which, when executed by a processor, implements the steps of any one of the methods described in claims 1 to 7.

—120

—110

**Fig. 1**

| Perform dynamic zero-bias calibration on a gyroscope of a phased array antenna to obtain updated gyroscope zero-bias data | S210 |

| Determine tracking delay data of the antenna | S220 |

| Predict an antenna beam pointing direction according to the updated gyroscope zero-bias data and the delay data to obtain a prediction result | S230 |

| Perform compensation on the antenna beam pointing direction according to the prediction result, and perform antenna tracking according to the antenna beam pointing direction subjected to compensation | S240 |

**Fig. 2**

Predict the angle change information of the phased array antenna according to the updated gyroscope zero-bias data and the delay data, using the angle change information as the prediction result — S310

Determine the compensated antenna beam pointing direction according to the angle change information — S320

Track the antenna according to the compensated beam pointing direction — S330

**Fig.3**

Determine the current attitude rotation matrix of the phased array antenna according to the angle change information — S410

Determine the compensated unit vectors in each direction according to the current attitude rotation matrix and the unit vector of the current beam pointing direction — S420

Determine the compensated unit vectors in each direction according to the current attitude rotation matrix and the unit vector of the current beam pointing direction — S430

**Fig.4**

Collect gyroscope data from the phased array antenna upon powering up — S510

Calculate the average offset value of the gyroscope data — S520

Determine whether the average offset value meets the preset working — S530

If met — S540

Update the gyroscope data based on the average offset value to obtain the updated gyroscope zero-bias data

If not met — S550

Recollect the gyroscope data from the phased array antenna and recalculating the average offset value, repeating the process until the average offset value meets the preset working conditions

**Fig.5**

Calibration Module — 610

Delay Module — 620

Prediction Module — 630

Compensation Module — 640

**Fig.6**

Fig.7

## INTERNATIONAL SEARCH REPORT

| International application No. |
| --- |
| **PCT/CN2022/104097** |

| A. | CLASSIFICATION OF SUBJECT MATTER |
| --- | --- |
| | H01Q 3/08(2006.01)i;  H01Q 3/02(2006.01)i |

According to International Patent Classification (IPC) or to both national classification and IPC

| B. | FIELDS SEARCHED |
| --- | --- |

Minimum documentation searched (classification system followed by classification symbols)

    H01Q

Documentation searched other than minimum documentation to the extent that such documents are included in the fields searched

Electronic data base consulted during the international search (name of data base and, where practicable, search terms used)

CNPAT, CNKI, WPI, EPODOC: 陀螺 or 惯性导航 or 惯导, INS or gyro+, 零飘 or 零漂 or 零偏 or 调零 or 校准 or 校正 or 调校 or 纠偏 or 偏移 or 偏离 or 漂移, 追踪 or 跟踪 or 追星, 天线, 延 or 迟 or 滞 or 时差 or 时间差, 补偿 or 修正, 指向 or 朝向 or 方向 or 运动 or 趋势 or 角度 or 航向 or 俯仰 or 横滚 or 横摆 or 偏航 or 方位, 卫星, 判断 or 判定 or 预测 or 预判 or 计算 or 求解 or 估算, 相控 or 相位, track+, antenna?, offset?, delay+, compensa+ or correct+, pitch+ or yaw+ or roll+, direct+, satellite?, predict+ or estimat+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 107483121 A (SHANDONG INSTITUTE OF SPACE ELECTRONIC TECHNOLOGY) 15 December 2017 (2017-12-15) description, paragraphs [0038]-[0099], and figures 3 and 4 | 1-10 |
| Y | US 2018233819 A1 (GENERAL DYNAMICS MISSION SYSTEMS INC.) 16 August 2018 (2018-08-16) description, paragraphs [0015]-[0051], and figures 1-3 | 1-10 |
| A | CN 106441361 A (XI'AN KUNLAN ELECTRONIC TECHNOLOGY CO., LTD.) 22 February 2017 (2017-02-22) entire document | 1-10 |
| A | CN 103022692 A (INTEGRATION TECHNOLOGY & EQUIPMENTS OF COMMUNICATION CO., LTD. et al.) 03 April 2013 (2013-04-03) entire document | 1-10 |
| A | CN 105444762 A (BEIJING INSTITUTE OF AEROSPACE CONTROL DEVICES) 30 March 2016 (2016-03-30) entire document | 1-10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 December 2022** | **16 December 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/104097** |

**C.** **DOCUMENTS CONSIDERED TO BE RELEVANT**

| Category* | Citation of document, with indication, where appropriate, of the relevant passages | Relevant to claim No. |
| --- | --- | --- |
| A | CN 105045298 A (BEIJING INSTITUTE OF AEROSPACE CONTROL DEVICES) 11 November 2015 (2015-11-11)<br>entire document | 1-10 |
| A | CN 107492717 A (SHANDONG INSTITUTE OF SPACE ELECTRONIC TECHNOLOGY) 19 December 2017 (2017-12-19)<br>entire document | 1-10 |
| A | JP 2005181149 A (MITSUBISHI ELECTRIC CORP.) 07 July 2005 (2005-07-07)<br>entire document | 1-10 |
| A | JP 0969719 A (PANASONIC ELECTRIC WORKS CO., LTD.) 11 March 1997 (1997-03-11)<br>entire document | 1-10 |
| A | US 5828337 A (TOYOTA JIDOSHA KABUSHIKI KAISHA) 27 October 1998 (1998-10-27)<br>entire document | 1-10 |

Form PCT/ISA/210 (second sheet) (January 2015)

## INTERNATIONAL SEARCH REPORT
### Information on patent family members

| International application No. |
| --- |
| **PCT/CN2022/104097** |

| Patent document cited in search report | | | Publication date (day/month/year) | Patent family member(s) | | | Publication date (day/month/year) |
| --- | --- | --- | --- | --- | --- | --- | --- |
| CN | 107483121 | A | 15 December 2017 | CN | 107483121 | B | 14 July 2020 |
| US | 2018233819 | A1 | 16 August 2018 | FR | 3062963 | A1 | 17 August 2018 |
| | | | | AU | 2018200878 | A1 | 30 August 2018 |
| | | | | TR | 201801964 | A2 | 27 August 2018 |
| | | | | ZA | 201800897 | A | 30 January 2019 |
| | | | | FR | 3062963 | B1 | 22 November 2019 |
| | | | | US | 10756428 | B2 | 25 August 2020 |
| | | | | AU | 2018200878 | B2 | 03 March 2022 |
| CN | 106441361 | A | 22 February 2017 | CN | 106441361 | B | 16 July 2019 |
| CN | 103022692 | A | 03 April 2013 | CN | 103022692 | B | 17 September 2014 |
| CN | 105444762 | A | 30 March 2016 | CN | 105444762 | B | 06 February 2018 |
| CN | 105045298 | A | 11 November 2015 | CN | 105045298 | B | 07 November 2017 |
| CN | 107492717 | A | 19 December 2017 | CN | 107492717 | B | 17 March 2020 |
| JP | 2005181149 | A | 07 July 2005 | JP | 4191588 | B2 | 03 December 2008 |
| JP | 0969719 | A | 11 March 1997 | JP | 3186533 | B2 | 11 July 2001 |
| US | 5828337 | A | 27 October 1998 | JP | H09321524 | A | 12 December 1997 |
| | | | | DE | 69726493 | D1 | 15 January 2004 |
| | | | | EP | 0809322 | A2 | 26 November 1997 |
| | | | | EP | 0809322 | B1 | 03 December 2003 |
| | | | | JP | 3709610 | B2 | 26 October 2005 |